# EUROPÄISCHE PATENTSCHRIFT

(11) **EP 0 836 608 B1**
(45) Veröffentlichungstag und Bekanntmachung des Hinweises auf die Patenterteilung: **15.12.1999**
(21) Anmeldenummer: 96923966.4
(22) Anmeldetag: 28.06.1996
(51) Int. Cl.: C07F 17/00, C08F 10/00

(54) **METALLOCENE MIT SILYLSUBSTITUIERTEN BRÜCKEN UND DEREN EINSATZ FÜR DIE OLEFINPOLYMERISATION**
METALLOCENES WITH SILYL-SUBSTITUTED BRIDGES AND THEIR USE FOR OLEFIN POLYMERIZATION
METALLOCENES A PONTS SUBSTITUES PAR SILYLE ET LEUR UTILISATION DANS LA POLYMERISATION D'OLEFINES

(30) Priorität: 03.07.1995 AT 112695
(43) Veröffentlichungstag der Anmeldung: 22.04.1998
(73) Patentinhaber: Borealis AG, 2323 Schwechat-Mannswörth (AT)
(72) Erfinder: THIELE, Karl-Heinz, D-06110 Halle (DE); SCHLIESSBURG, Christine, D-06217 Merseburg (DE); ERNST, Eberhard, A-4223 Katsdorf (AT); REUSSNER, Jens, A-4050 Traun (AT); BILDSTEIN, Benno, A-6020 Innsbruck (AT); DENIFL, Peter, A-6150 Gries am Brenner (AT)
(74) Vertreter: Kunz, Ekkehard, Dr.
(86) Internationale Anmeldenummer: EP9602828
(87) Internationale Veröffentlichungsnummer: WO9702276

(56) Entgegenhaltungen:
- WO-A-95/06071
- JOURNAL OF POLYMER SCIENCE: PART A: POLYMER CHEMISTRY, Bd. 32, 1994, Seiten 149-158, XP000418022 TSAI, W.-M. ET AL.: "silolene-bridged zirconocenium polymerization catalysts"

## Beschreibung

Die Erfindung betrifft neue Metallocene und deren Einsatz als Katalysatoren bei der Olefinpolymerisation.

Metallocene der Metalle der IV. Nebengruppe des Periodensystems der Elemente sind hochaktive Katalysatoren für die Polymerisation von Olefinen. Die resultierenden Polyolefine besitzen neue Eigenschaftskombinationen und ergänzen das Produktspektrum der bisher mit bekannten konventionellen Ziegler-Natta-Katalysatoren hergestellten Polyolefine.
Es ist bekannt, daß Katalysatoren auf der Basis unverbrückter, substituierter und unsubstituierter Biscyclopentadienyl-Metallocene im Zusammenwirken mit Aluminoxanen als Cokatalysator für die Herstellung von Polyethylen und Ethylen/-Olefin-Copolymere genutzt werden können (EXXON EPA 128 046).
Desweiteren ist bekannt, daß mit verbrückten, chiralen Metallocenen stereoreguläre Polyolefine darstellbar sind. Für eine Verbrückung der Ligandensysteme werden hauptsächlich Dimethylsilandiyl-Gruppen (CHISSO EPA 316 155), Methyl-phenylsilandiyl-Gruppen (HOECHST EPA 320 762), Ethylen-Gruppen (Brintzinger et al:, J. Organomet. Chem., 288 (1985) 63-67) und Isopropyliden-Brücken (Mitsui Toatsu EPA 459 264) verwendet. In Abhängigkeit vom Ligandentyp und den Substituenten können isotaktische, syndiotaktische, hemiisotaktische, stereoblockartige und ataktische Homo- und Copolymere mit aliphatischen oder cyclischen Strukturen dargestellt werden.
Als Liganden werden bevorzugt substituierte und unsubstituierte Cyclopentadienyl-Einheiten (CHISSO EPA 316 155), substituierte und unsubstituierte Indenyl-Einheiten (Hoechst EPA 302 424; Hoechst EPA 485 823) sowie substituierte und unsubstituierte Cyclopentadienyl-Einheiten in Kombination mit unsubstituierten Fluorenyl-Gruppen (Mitsui Toatsu EPA 412 416) eingesetzt.
Ebenso bekannt ist, daß zur Polymerisation von Olefinen auch verbrückte Metallocene mit einem Cyclopentadienyl-System und einem Heteroatomliganden ("constrained geometry catalyst") eingesetzt werden können (EXXON US 5 096 867).
Von diesen verschiedenen Metallocentypen erlangten die verbrückten, chiralen, substituierten Bisindenylsysteme eine besondere Bedeutung. So konnte nachgewiesen werden, daß die Art der Substituenten und die Stellung der Substituenten am Liganden des Metallocens einen wesentlichen Einfluß auf die Reaktivität des Katalysatorsystems und den stereoregulären Aufbau der erhaltenen Polyolefine ausüben. Besonders zwei Substitutionsmöglichkeiten erwiesen sich als vorteilhaft. Die erste Möglichkeit geht von einer Substitution am Indenylliganden in 2, 4 und/oder 6 Position aus (Hoechst EPA 485823; Angew. Chem., 10 (1992) 1373), die zweite Möglichkeit beschreibt die Anellierung am Benzolring des Indenylliganden (Organometallics 1994,13, 964-970). Beide Katalysatortypen können für die Darstellung isotaktischer Polypropylene und Ethylen/a-Olefin-Copolymere eingesetzt werden.

Mehrfach substituierte Indenyl-Liganden sind nur mit erheblichem Aufwand herstellbar. Relativ einfache Systeme mit guter Aktivität, die Indenyl-, 2-Methylindenyl- oder 2-Methylbenz[e]indenyl-Liganden enthalten, liefern Produkte und insbesondere Polypropylen mit relativ niedrigen Molmassen, welche für viele Anwendungen zu gering sind und die untere Grenze für die technische Anwendung darstellen.

Es bestand somit die Aufgabe, weitere Strukturvarianten von verbrückten Metallocenen als Katalysatoren zur Polymerisation von Olefinen zu finden, die Polyolefine, insbesondere Polypropylene mit höheren Molmassen liefern.

Überraschenderweise wurde nun gefunden, daß silylsubstituierte, diylverbrückte Metallocensysteme geeignete Katalysatoren für die Herstellung von Polyolefinen und besonders von Polypropylenen mit höheren Molmassen sind.

Gegenstand der vorliegenden Erfindung sind demnach Metallocene der Formel I 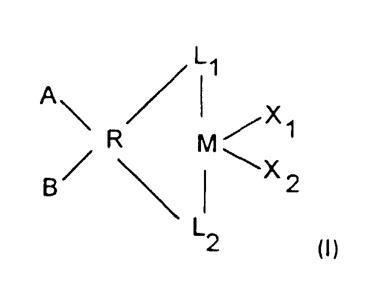 worin M ein Metall aus der Gruppe Ti, Zr, Hf, V, Nb, Ta oder ein Element aus der Gruppe der Lanthaniden ist,
X₁ und X₂ gleich oder verschieden sind und eine C₁ - C₁₀-Alkylgruppe, eine C₁ - C₁₀- Alkoxygruppe, eine C₆ - C₁₀-Arylgruppe, eine C₆ - C₁₀- Aryloxygruppe, eine C₂ - C₁₀ -Alkenylgruppe, eine C₇ - C₂₀- Arylalkylgruppe, eine C₇- C₂₀-Alkylarylgruppe, eine C₈ - C₂₀ - Arylalkenylgruppe, Wasserstoff oder ein Halogenatom bedeuten,
L₁ und L₂
   a) gleich oder verschieden sind und einen gegebenenfalls ein- oder mehrfach substituierten, ein- oder mehrkernigen Kohlenwasserstoffrest mit wenigstens einer Cyclopentadienyl- Einheit bedeuten, welcher mit M eine Sandwichstruktur bilden kann, oder
   b) L₁ einen gegebenenfalls ein- oder mehrfach substituierten ein- oder mehrkernigen Kohlenwasserstoffrest mit wenigstens einer Cyclopentadienyl-Einheit bedeutet, welcher mit M eine Sandwichstruktur bilden kann und L₂ ein Amido-, Phosphido- oder Arsenidorest der Formel

      E-D 〈

      ist, in der
      D Stickstoff, Phosphor oder Arsen bedeuten und E die Bedeutung von X₁ und X₂ hat,
      R Kohlenstoff, Silizium, Germanium oder Zinn ist,
      A und B gleich oder verschieden sind und einen Trimethylsilylrest der Formel -Si(CH₃)₃ bedeuten, wobei B auch die Bedeutung eines C₁- bis C₁₀-Alkylrestes, bevorzugt eines C₁- bis C₄-Alkylrestes, oder eines C₆- bis C₁₀-Arylrestes haben kann.

Als Liganden L₁ und/oder L₂ sind substituierte oder unsubstituierte Cyclopentadienyl-, Indenyl- oder Fluorenylreste bevorzugt. Besonders bevorzugt sind Cyclopentadienyl-, Tetramethylcyclopentadienyl-, Indenyl-, 2-Methylindenyl-, 2-Methyl-4-Phenylindenyl-, 2-Methyl-4,5-benzoindenyl-, Fluorenyl-Einheiten sowie ferrocen- und ruthenocensubstituierte Einheiten, wie sie beispielsweise in der EP-A-673.946 beschrieben sind.

Gemäß Erfindung sind die folgenden Metallocene besonders bevorzugt: Bis(trimethylsilyl)silandiyl-dicyclopentadienyl-zirkoniumdichlorid, Bis(trimethylsilyl)silandiyl-diindenyl-zirkoniumdichlorid, Bis(trimethylsilyl)silandiyl-bis(2-methylindenyl)-zirkoniumdichlorid, Bis(trimethylsilyl)silandiyl-bis(2-methyl-4,5-benzoindenyl)-zirkoniumdichlorid, Bis(trimethylsilyl)silandiyl-bis(2-methyl-4-phenylindenyl)-zirkoniumdichlorid, Bis(trimethylsilyl)silandiyl-bis(2-methyl-4-naphthylindenyl)-zirkoniumdichlorid, Bis(trimethylsilyl)silandiyl-difluorenyl-zirkoniumdichlorid, Bis(trimethylsilyl)silandiyl-(fluorenyl)(cyclopentadienyl)-zirkoniumdichlorid, Bis(trimethylsilyl)silandiyl-(fluorenyl)(indenyl)-zirkoniumdichlorid und Bis(trimethylsilyl)silandiyl-(tetramethylcyclopentadienyl)(indenyl)-zirkoniumdichlorid, Methyl(trimethylsilyl)silandiyl-dicyclopentadienyl-zirkoniumdichlorid, Methyl(trimethylsilyl)silandiyl-diindenyl-zirkoniumdichlorid, Methyl(trimethylsilyl)silandiyl-bis(2-methylindenyl)-zirkoniumdichlorid, Methyl(trimethylsilyl)silandiyl-bis(2-methyl-4,5-benzoindenyl)-zirkoniumdichlorid, Methyl(trimethylsilyl)silandiyl-bis(2-methyl-4-phenylindenyl)-zirkoniumdichlorid, Methyl(trimethylsilyl)silandiyl-bis(2-methyl-4-naphthylindenyl)-zirkoniumdichlorid, Methyl(trimethylsilyl)silandiyl-difluorenyl-zirkoniumdichlorid, Methyl(trimethylsilyl)silandiyl-(fluorenyl)(cyclopentadienyl)-zirkoniumdichlorid, Methyl(trimethylsilyl)silandiyl-(fluorenyl)(indenyl)-zirkoniumdichlorid und Methyl(trimethylsilyl)silandiyl-(tetramethylcyclopentadienyl)(indenyl)-zirkoniumdichlorid.

Ein weiterer Gegenstand der Erfindung ist ein Verfahren zur Herstellung der Metallocene 1, das dadurch gekennzeichnet ist, daß man eine Verbindung der Formel II 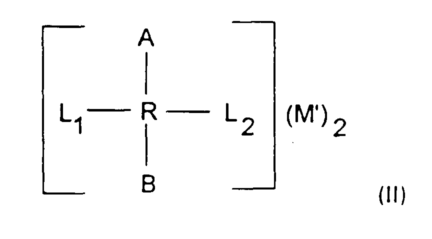 wobei L₁, L₂, A, B und R die in Formel I beschriebene Bedeutung haben und M' ein Alkalimetall, bevorzugt Lithium, bedeutet, mit einer Verbindung der Formel III

M (X')₂ X₁ X₂ (III),

worin M, X₁ und X₂ die in Formel I genannte Bedeutung besitzt und X' ein Halogenatom, bevorzugt Chlor bedeutet, umsetzt.
Die Metallocene I können beispielsweise nach folgendem Reaktionsschema hergestellt werden: 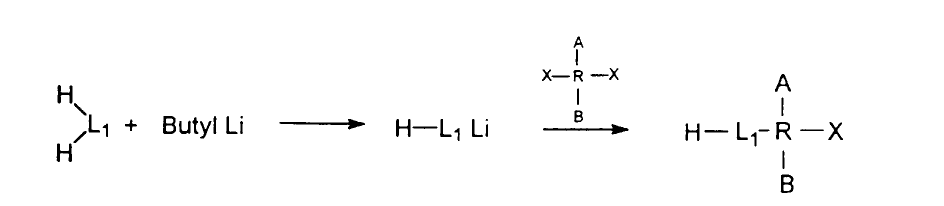 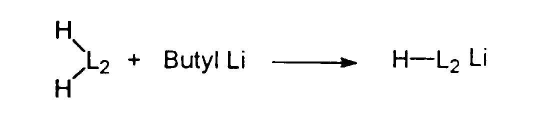 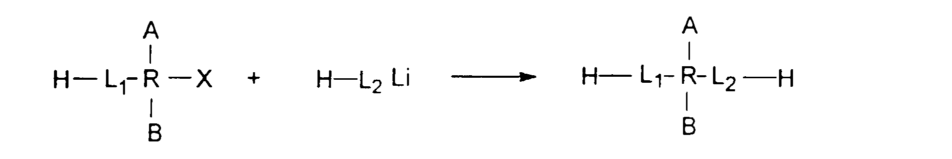 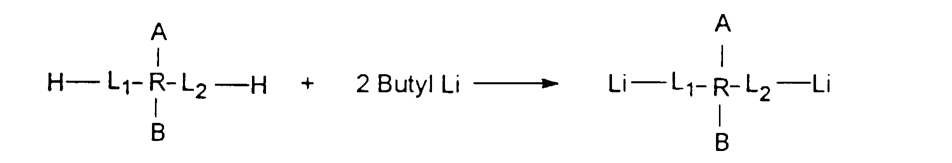 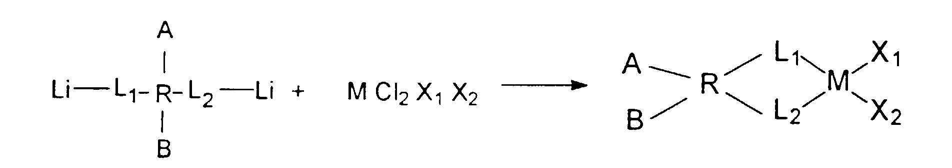 X = F; Cl; Br; J
X₁, X₂, L₁ und L₂ haben die oben genannte Bedeutung.

Zusätzlich können als Liganden L₂ Amido-, Phosphido- und Arsenido-Reste verwendet werden, wobei die Substituenten dieser Liganden die Bedeutung von X₁ und X₂ besitzen oder aber ferrocenyl- bzw. ruthenocenylsubstituiert bzw. - anneliert sind.
Die Umsetzung der dimetallierten Verbindung der Formel II mit dem Metallhalogenid der Formel III in der letzten Stufe des erfindungsgemäßen Verfahrens kann beispielsweise, wie in EPA 659756 beschrieben, erfolgen. Vorteilhafterweise jedoch wird die Umsetzung der dimetallierten Verbindung der Formel II mit dem Metallhalogenid der Formel III in der letzten Stufe des erfindungsgemäßen Verfahrens in Lösungsmittelgemischen aus aromatischen und/oder aliphatischen Kohlenwasserstoffen, die auch halogeniert sein können, mit Dialkylethern, vorzugsweise Alkan/Ether-Gemischen, wie zum Beispiel Hexan/Ether-Gemische, durchgeführt. Die Lösungsmittelgemische besitzen bevorzugt Übergangsenergien E_{T}(30) (empirischer Parameter als Maß für die Polarität von Lösungsmitteln) in einem Bereich von 35,5 bis 31,5 kcal/mol, besonders bevorzugt von 34,5 bis 32,5 kcal/mol. Die Übergangsenergie E_{T} (30) wird gemäß Chemical Reviews 1994, Vol. 94, No. 8, 2319 ff. als die Abhängigkeit der Bandenlage und -intensität des Chromophors Pyridinium-N-phenolat-betain vom gewählten Lösungsmittel definiert. Beim Auflösen solcher Charge-Transfer-Komplexe verschiebt sich das langwelligste Absorptionsmaximum um so stärker, je polarer das Lösungsmittel ist. Aus der gemessenen Frequenz v dieses Maximums erhält man durch Umrechnung die Übergangsenergie E_{T}(30) in kcal/mol.

Als Kohlenwasserstoffe und Dialkylether kommen vor allem solche in Frage, wie sie beispielsweise in Chemical Reviews 1994, Vol. 94, No. 8, S. 2337 - 2340 angeführt sind. Als aromatische Kohlenwasserstoffe eignen sich beispielsweise solche Verbindungen wie Toluol, Benzol oder p-Xylol. Aliphatische Kohlenwasserstoffe können beispielsweise alle C₅- bis C₁₂-Alkane sein. Bevorzugt sind n-Pentan, n-Hexan, n-Heptan oder Cyclohexan. Besonders brauchbar ist n-Hexan. Bei den Dialkylethern werden bevorzugt alle C₂- bis C₄-Dialkylether, wie zum Beispiel Diethyl-, Di-n-propyl-, Diisopropyl-, Di-n-butyl- oder Tert-butyl-methylether. Als halogenierte Kohlenwasserstoffe eignen sich beispielsweise alle C₁-bis C₄-Chloralkane. Besonders bevorzugt ist Dichlormethan.

Ein weiterer Gegenstand der Erfindung ist die Verwendung der erfindungsgemäßen Metallocene als Polymerisationskatalysatoren bei der Polymerisation von Olefinen, sowie ein Olefinpolymerisationsverfahren, bei dem die erfindungsgemäßen Metallocene als Katalysatoren eingesetzt werden.

Bevorzugt wird bei der Olefinpolymerisation ein Cokatalysator, beispielsweise ein Aluminoxan der Formel IV für den linearen Typ: 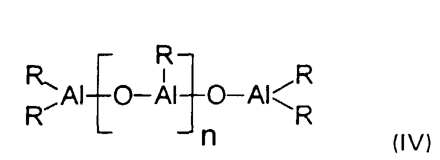 und / oder der Formel V: 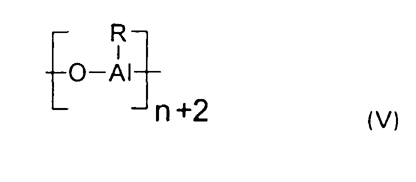 für den cyclischen Typ eingesetzt, wobei in den Formeln IV und V die Reste gleich oder verschieden sein können und eine C₁-C₆-Alkylgruppe bedeuten und n eine ganze Zahl von 1 - 50 ist. Bevorzugt sind die Reste gleich und bedeuten Methyl, Isobutyl, Phenyl oder Benzyl, besonders bevorzugt ist Methyl. Das Aluminoxan kann auf verschiedene Arten nach bekannten Verfahren hergestellt werden. Eine Möglichkeit ist beispielsweise die Umsetzung von Aluminiumalkylen mit kristallwasserhaltigem Aluminiumsulfat (Hoechst EP 302424). In der vorliegenden Erfindung wird handelsübliches MAO (Methylaluminoxan, Fa. Witco, BRD) verwendet.
Es ist auch möglich, das Metallocen der Formel I vor der Verwendung in der Polymerisationsreaktion mit einem Aluminoxan der Formel IV und/oder V zu mischen. Das Mischen wird bevorzugt in Lösung vorgenommen. Bevorzugt wird dabei das Metallocen in einem inerten Kohlenwasserstoff aufgelöst und anschließend mit der Aluminoxanlösung vermischt. Als inerter Kohlenwasserstoff eignet sich ein aliphatischer oder aromatischer Kohlenwasserstoff. Bevorzugt wird Toluol verwendet.
Die Konzentration des Aluminoxans in der Lösung liegt im Bereich von 5-30 Ma.-% bezogen auf die Gesamtlösung. Das Metallocen wird vorzugsweise in einer Menge von 10 ⁻⁴ - 1 mol pro mol Aluminoxan eingesetzt. Die Mischzeit beträgt etwa 5 Minuten bis 24 Stunden, vorzugsweise 5 bis 60 Minuten. Man arbeitet üblicherweise bei einer Temperatur von -10 bis +70°C, insbesondere bei 10 bis 40°C.

Das Metallocen kann auch auf einen Träger aufgebracht werden. Geeignete Träger sind beispielsweise die anorganischen Oxide der Metalle der II - IV Hauptgruppe des Periodensystems. Bevorzugt sind die Oxide der Metalle Magnesium, Calcium, Aluminium, Silicium, Bor und deren Mischungen, beispielsweise die im Handel erhältlichen Al-Oxide "Alumina Typ C" (Degussa) und Si-oxide vom Typ "Silica Davison Grade 952-957" oder vom Typ "Aerosil" (Degussa) sowie Mischungen aus Al₂O₃ und SiO₂. Besonders bevorzugt werden Katalysatorträger gemäß EP-A-685.494.

Die Polymerisation kann in Lösungs-, Suspensions- oder Gasphasenverfahren kontinuierlich oder diskontinuierlich bei einer Temperatur von -10 bis +200°C, vorzugsweise +20 bis +80°C durchgeführt werden. Polymerisiert oder copoymerisiert werden Olefine der Formel R^{a}-CH=CH-R^{b}, In dieser Formel sind R^{a} und R^{b} gleich oder verschieden und bedeuten ein Wasserstoffatom oder einen Alkylrest mit 1 bis 20 C-Atomen. R^{a} und R^{b} können jedoch auch mit den sie verbindenden C-Atomen einen Ring bilden. Beispielsweise werden solche Olefine wie Ethylen, Propylen, 1-Buten, 1-Hexen, 4-Methyl-1-penten, 1-Octen, Cyclopenten, Norbornen oder Norbornadien polymerisiert oder copolymerisiert. Insbesondere werden Ethylen, Propylen und 1-Buten polymerisiert oder copolymerisiert.
Als Molmassenregler wird, falls erforderlich, Wasserstoff zugegeben. Der Gesamtdruck der Polymerisation beträgt 0,5 - 150 bar. Bevorzugt ist die Polymerisation in dem Druckbereich von 1 - 40 bar.
Es hat sich als vorteilhaft erwiesen, die Umsetzung der Monomeren in Gegenwart des Metallocenkatalysatorsystems bei einem Molverhältnis von Aluminium der oligomeren Alumoxanverbindung zum Übergangsmetall der Metallocenverbindung von 10⁶ : 1 bis 10¹ : 1, bevorzugt 10⁴ : 1 bis 10² : 1 durchzuführen.

Wenn die Polymerisation als Suspensions- oder Lösungspolymerisation durchgeführt wird, wird ein inertes Lösemittel verwendet. Beispielsweise können aliphatische oder cycloaliphatische Kohlenwasserstoffe, wie Pentan, Hexan oder Cyclohexan verwendet werden. Brauchbar ist auch Toluol. Bevorzugt wird im flüssigen Monomeren polymerisiert.

Bei der Copolymerisation von Ethylen mit Propylen wird erfindungsgemäß in flüssigem Propylen oder in Hexan als Suspensionsmittel polymerisiert. Vorzugsweise wird bei der Polymerisation in flüssigem Propylen das Ethylen in der Menge zugeführt, daß sich über der Flüssigphase ein Partialdruckverhältnis P_{C2}/P_{C3} von größer als 0,5, insbesondere größer als 1,0 einstellt ( P_{C2} = Partialdruck des Ethylens in der Gas-phase über der Suspension; P_{C3} = Partialdruck des Propylens in der Gasphase über der Suspension). Bei der Copolymerisation in Hexan als Suspensionsmittel wird ein Ethylen /Propylen-Gasgemisch mit einem Propylengehalt von einem bis 50 Mol%, vorzugsweise 5 bis 30 Mol%, zugesetzt. Der Gesamtdruck wird während der Polymerisation durch Nachdosierung konstant gehalten. Der Gesamtdruck beträgt 0,5 bis 40 bar, vorzugsweise 1 bis 20 bar.

Die Dauer der Polymerisation beträgt im allgemeinen etwa 10 Minuten bis 6 Stunden, vorzugsweise 30 Minuten bis 2 Stunden.

Die erfindungsgemäß verwendeten Katalysatoren erweitern die Palette der polymerisationswirksamen Metallocene zur Darstellung von Polyolefin-Homo- und Copolymeren. Insbesondere zeichnen sich die erfindungsgemäßen Metallocene dadurch aus , daß sie im technisch interessanten Temperaturbereich zwischen 20 und 80°C Polymere und Copolymere mit hoher, technisch relevanter Molmasse und enger Molmassenverteilung erzeugen.
Ein weiterer Vorteil ergibt sich aus dem bevorzugten erfindungsgemäßen Metallocen-Herstellungsverfahren, bei dem unter Verwendung der bevorzugten Lösungsmittelgemische, insbesondere von Ether/Alkan-Gemischen, bei der Umsetzung der dimetallierten Ligandenpaare der Formel II mit dem Metallhalogenid der Formel III stereoselektiv hohe Ausbeuten der reinen Racemat- bzw. Pseudoracematform der resultierenden Metallocenverbindung zugänglich sind. Unter Pseudoracematen sind Verbindungen zu verstehen, welche die gleiche räumliche Anordnung der Liganden wie Racemate besitzen, aber durch die Art der Substitution in der Brücke unsymetrisch sind.

Die nachfolgenden Beispiele sollen die Erfindung näher erläutern.

Es bedeuten:
- M_{w} =: gewichtsmittlere Molmasse in g/mol,
- Mₙ =: zahlenmittlere Molmasse in g/mol,
- M_{w}/Mₙ =: Molmassenverteilung, ermittelt durch Gelpermeationschromatographie,
- MS: Massenspektroskopie

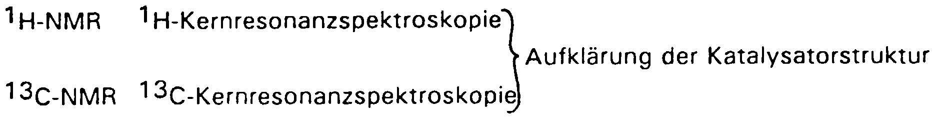

### BEISPIEL I:

### Bis(trimethylsilyl)silandiyl-dicyclopentadienyl-zirkoniumdichlorid

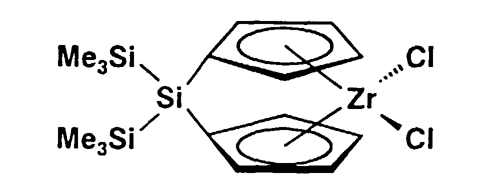

5 g (16,4 mmol) Bis(trimethylsilyl)-dicyclopentadienyl-silan (*K. Hassler, K. Schenze/, J. Organomet. Chem. **484,** C1-C4, (1994))* werden in 20 ml Diethylether gelöst. Die Lösung wird auf -78 °C abgekühlt und mit 21 ml einer 1,55 molaren Lösung von n-Butyllithium in n-Pentan versetzt. Man erwärmt die Lösung auf Raumtemperatur, filtriert das Bis(trimethylsilyl)silandiyl-dicyclopentadienyldilithium ab und trocknet es im Vakuum. Die Ausbeute beträgt 3,7 g (71,4% d. Th.).
1,1g (3,5 mmol) Bis(trimethylsilyl)silandiyl-dicyclopentadienyl-dilithium werden in 50 ml Toluol vorgelegt. Man kühlt die Suspension auf -40 °C ab und versetzt mit 1,3 g (3,5 mmol) Zirkoniumtetrachlorid-bis(tetrahydrofuran). Nach dem Erwärmen auf Raumtemperatur wird die Lösung 24 Stunden bei Raumtemperatur gerührt und danach filtriert. Das Lösungsmittel wird im Vakuum entfernt, der Rückstand mit n-Pentan extrahiert und der Extrakt zur Trockene eingeengt, wobei Bis(trimethylsilyl)silandiyl-dicyclopentadienyl-zirconiumdichlorid zurückbleibt. Die Ausbeute beträgt 600 mg (37,2% d. Th.).
MS (EI, 70 eV, 200 °C): m/z = 464 (100%) Molekülpeak; 354 (95%) 1-Methylsilyl-3-silyl-2-silandiyl-2-dicyclopentadienyl-zirkoniumchlorid-Radikalkation; 318 (49%) 1-Methylsilyl-3-silyl-2-silandiyl-2-dicyclopentadienyl-zirkonium-Radikalkation
- ¹H-NMR (C₆D₆):: 0,14 ppm (18 H, d); 5,87 ppm (4 H, t); 6,75 ppm (4 H, t)
- ¹³C-NMR (THF-d₈):: 0,19 ppm; 103,97 ppm; 118,30 ppm; 125,90 ppm; 128,35 ppm

### BEISPIEL II:

### Bis(trimethylsilyl)silandiyl-diindenyl-zirkoniumdichlorid (Diastereomerengemisch)

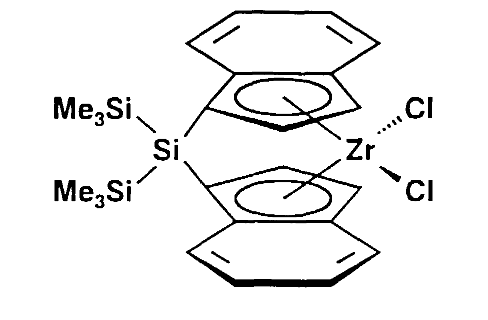

5 g (20,4 mmol) 2,2-Dichlorhexamethyltrisilan *(G. Kolliger, Dissertation 1993, TU Graz)* werden in 50 ml n-Pentan vorgelegt. Man kühlt die Lösung auf -78 °C und versetzt mit 5 g (40,8 mmol) Indenyllithium. Nach Erwärmen auf Raumtemperatur wird die Lösung 24 Stunden gerührt, anschließend filtriert, erneut auf -78 °C abgekühlt, und es werden 21 ml einer 1,58 molaren Lösung von n-Butyllithium in n-Pentan zugetropft. Nach Erwärmen auf Raumtemperatur wird das Reaktionsgemisch filtriert und das zurückbleibende Bis(trimethylsilyl)silandiyl-diindenyl-dilithium im Vakuum getrocknet. Die Ausbeute beträgt 3,5 g (40,9% d. Th.).

Eine Lösung von 3,5 g (8,4 mmol) Bis(trimethylsilyl)silandiyl-diindenyl-dilithium in 50 ml Toluol wird auf -30 °C abgekühlt. Zu der Suspension werden 3,1 g (8,3 mmol) Zirkoniumtetrachlorid-bis(tetrahydrofuran) gegeben. Nach Erwärmen auf Raumtempe-ratur wird das Reaktionsgemisch 5 Stunden lang auf 50 °C im Wasserbad erwärmt und anschließend filtriert. Das Lösungsmittel wird im Vakuum entfernt, der Rückstand in n-Pentan aufgenommen und die Lösung filtriert. Nach dem Entfernen des Lösungsmittels im Vakuum bleibt das Bis(trimethylsilyl)silandiyl-diindenyl-zirkoniumdichlorid zurück. Die Ausbeute beträgt 1,2 g (25,5% d. Th.).
MS (El, 70 eV. 200 °C): m/z = 564 (100%) Molpeak; 453 (29%) 1 -Trimethylsilyl-2-silandiyl-2-diindenyl-zirkoniumchlorid-Radikalkation; 389 (36%) 1-Methylsilyl-2-silandiyl-2-diindenyl-zirkonium-Radikalkation; 289 (58%) 1-Methylsilyl-2-silandiyl-2-diindenyl-Radikalkation
- ¹H-NMR (THF-d₈):: 0,0917 ppm (18 H, t); 5,65 ppm (2 H, d); 6,73 ppm (2 H, d); 7,13 ppm (8 H, m)

### BEISPIEL III:

### Bis(trimethylsilyl)silandiyl-bis(2-methylindenyl)-zirkoniumdichlorid

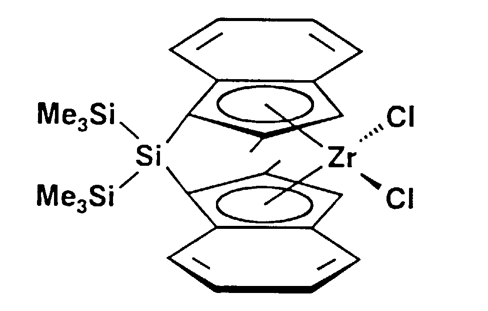

Eine Lösung von 3 g ( 20 mmol) 2-Methylinden *(C. F. Koelsch, P. R. Johnsen, J. Am. Chem. Soc.* ***65***, 567, (1943)) in 50 ml Diethylether wird auf -78 °C abgekühlt und mit 14,6 ml einer 1,58 molaren Lösung von n-Butyllithium in n-Pentan versetzt. Man erwärmt die Lösung auf Zimmmertemperatur, filtriert das entstandene 2-Methylindenyllithium ab und trocknet im Vakuum. Die Ausbeute beträgt 2,5 g (91,9% d. Th.).

Zu 2,2 g (9,2 mmol) 2,2-Dichlorhexamethyltrisilan in 50 ml n-Pentan wird bei -78 °C eine Lösung von 2,5 g (18,4 mmol) 2-Methylindenyl-lithium in 50 ml Diethylether gegeben. Nach Erwärmen auf Raumtemperatur wird das Reaktionsgemisch 4 Stunden lang auf 50 °C im Wasserbad erwärmt, anschließend warmfiltriert, erneut auf -78 °C abgekühlt und mit 11,6 ml einer 1,58 molaren Lösung von n-Butyllithium in n-Pentan versetzt. Nach Erwärmen auf Zimmertemperatur wird die Lösung filtriert und das zurückbleibende Bis(trimethylsilyl)silandiylbis(2-methylindenyl)-dilithium im Vakuum getrocknet. Die Ausbeute beträgt 2,6 g (63,4% d. Th.).

Zu 2,2 g (4,9 mmol) Bis(trimethylsilyl)silandiyl-bis(2-methylindenyl)-dilithium in 50 ml Toluol werden bei -30°C 1,8g (4,9 mmol) Zirkoniumtetrachloridbis-(tetrahydrofuran) gegeben. Nach Erwärmen auf Raumtemperatur wird das Reaktionsgemisch 4 Stunden lang auf 50 °C im Wasserbad erwärmt, anschließend filtriert und das Toluol im Vakuum entfernt. Der Rückstand wird mit n-Pentan gewaschen. Nach Dekantieren des n-Pentans wird das Bis(trimethylsilyl)silandiyl-bis(2-methylindenyl)-zirkoniumdichlorid im Vakuum getrocknet. Die Ausbeute beträgt 800 mg (27,6% d. Th.).
MS (El, 70eV, 200°C): m/z = 596 (0,5%) Molpeak; 483 (4,7%) 1-Trimethylsilyl-3-silyl-2-silandiyl-2-bis(2-methylindenyl)-zirkonium-Radikalkation; 441 (10,6%) 1-Methylsilyl-3-silyl-2-silandiyl-2-bis(2-methylindenyl)-zirkonium-Radikalkation; 383 (62,4%) 1-Trimethylsilyl-3-silyl-2-silandiyl-2-bis(2-methylindenyl)-Radikalkation; 348 (26%) 1-Dimethylsilyl-2-bis(2-methylindenyl)-silyl-Radikalkation; 129 (100%) Bis(2-methylindenyl)-Radikalkation; 115 (61,3%) 2-Methylindenyl-Radikalkation
- ¹H-NMR (THF-d₈):: -0,0621 ppm (18 H, t); 2,26 ppm (6 H, s); 5,878 ppm (2 H, s); 6,4069 ppm (2 H, d); 7,1-7,2 ppm (8 H, m)

### Beispiel IV:

### Methyl(trimethylsilyl)-silandiyl-bis(2-methylindenyl)-zirkoniumdichlorid

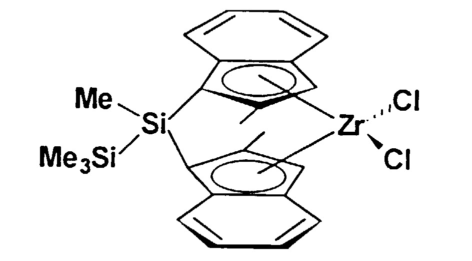

Zu einer Lösung von 4.35 g (11.6 mmol) 1,1,1,2-Tetramethyl-bis(2-methylindenyl)disilan [M.Kumada, T. Kondo, K. Mimura, M. Ishikawa, K. Yamamoto, S. Ikeda, M. Kondo; J. Oranomet. Chem. 43 (1972) 293] in 50 ml absolutem Diethylether werden unter Argon bei -80° C 25.6 ml einer 1-molaren Methyllithium-Lösung (25.6 mmol) gegeben. Das Reaktionsgemisch wird während 5 Stunden auf Raumtemperatur gebracht und weitere 13 Stunden bei Raumtemperatur gerührt. Nach Abziehen des Lösungsmittels am Hochvakuum erhält man einen weißen Rückstand. Dieser wird mit 100 ml absolutem n-Hexan versetzt, die dabei erhaltene Suspension unter Argon filtriert und der Filtrationsrückstand 5 mal mit absolutem n-Hexan gewaschen. Nach 2 Stunden Trocknen am Hochvakuum erhält man 4.43 g des entsprechenden Dilithiumsalzes (98.7 % Ausbeute) als weißes, pyrophores Pulver, welches ohne weitere Reinigung zur Synthese des Zirkonocendichlorids eingesetzt wird.
Zu einer Lösung aus 4.43 g des Dilithiumsalzes (11.5 mmol) in 50 ml absolutem Diethylether wird bei -85°C eine Suspension von 2.68 g Zirkoniumtetrachlorid (11.5 mmol) in 50 ml absolutem n-Hexan gegeben. Nach Erwärmen auf Raumtemperatur wird 52 Stunden bei Raumtemperatur gerührt. Nach Abziehen des Lösungsmittels am Hochvakuum wird der feste Rückstand einmal mit absolutem n-Hexan und zweimal mit wenig absolutem Diethylether gewaschen, in 50 ml absolutem Methylenchlorid aufgenommen, unter Argon filtriert und das Filtrat am Hochvakuum bis zur beginnenden Niederschlagsbildung eingeengt. Nach 2 Tagen bei -20°C wird der gebildete Niederschlag abfiltriert, mehrmals mit wenig absolutem n-Hexan gewaschen und am Hochvakuum getrocknet. Man erhält 5.18 g Methyl(trimethylsilyl)-silandiyl-bis(2-methylindenyl)-zirkoniumdichlorid (84.4 % Ausbeute; rac : meso = 20) als gelbes, mikrokristallines Pulver.
C₂₄H₂₈Si₂ZrCl₂ (534.79 g/mol)
**MS (El, 30 eV) [m/z(%)]:** M⁺: 534 (100), M⁺-Me: 519 (8), M⁺-Cl: 499 (8), M⁺-Cl-Me: 484 (12), M⁺-SiMe₃: 461 (100), M⁺SiMe₃-CI-2H: 424 (31), M⁺SiMe₃-Cl-Me-2H: 409 (18);
^{**1**}**H-NMR (CD**_{**2**}**Cl**_{**2**} **[ppm]**: 0,57 (9H, s, Si(CH₃)₃); 1,44 (3H, s, Si(CH₃)); 2,20 und 2,27 (6H, jeweils s, (CH₃)-Ind); 6,65 bis 7,82 (10H, m, Ind).

### Polymerisationsbeispiele:

### Beispiel 1

Ein 2 l Rührreaktor wird nach dem Inertisieren bei Raumtemperatur mit 6,6 g 10%igem MAO und 300 g flüssigem, gereinigten Propylen gefüllt und die Mischung 15 Minuten gerührt.
5 mg Bis(trimethylsilyl)silandiyl-dicyclopentadienyl-zirkoniumdichlorid werden in 2,4 ml Toluol gelöst und mit 6,6 g 10%igem MAO gemischt. Anschließend drückt man die Katalysatorlösung mit weiteren 200 g Propylen in den Reaktor und heizt den Ansatz auf die Polymerisationstemperatur von 70°C auf, die während einer Zeit von zwei Stunden konstant gehalten wird. Die Reaktion wird durch Flashen des Propylens nach einer Stunde beendet. Es wurden 106,3 g Polypropylen mit einer Molmasse M_{w} = 25 000 g/mol und einer Verteilungsbreite M_{w}/Mₙ = 2,9 erhalten.

### Beispiel 2

In einen 2 l-Rührreaktor werden nach der Inertisierung unter Stickstoff 3,9 g 10 %iges MAO und 1 dm³ n-Hexan dosiert und 15 Minuten gerührt. Nach Entgasung des Suspensionsmittels und Aufheizen des Reaktors auf die Reaktionstemperatur von 70 °C erfolgt der Polymerisationsstart durch Eindrücken der Katalysatorlösung mit einem Ethylen/Propylen-Gemisch, welches 11,3 Mol% Propylen enthält.

Die Katalysatorlösung wird durch Auflösen von 3 mg Bis(trimethylsilyl)silandiyldicyclopentadienyl-zirkoniumdichlorid in 1,4 ml Toluol und Vermischen mit 4,0 g 10%igem MAO hergestellt.
Der Druck im Reaktor wird während der gesamten Polymerisationszeit auf 2 bar durch Nachdosierung des Gasgemisches konstant gehalten. Die Rührerdrehzahl beträgt 700 Umdrehungen pro Minute, die Polymerisationszeit 2 Stunden.
Es wurden 14,8 g Ethylen/Propylen-Copolymer mit einer Molmasse M_{w} = 134 000 g/mol und eine Verteilungsbreite M_{w}/Mₙ = 6,3 erhalten. Der Propylengehalt beträgt 2,7 Mol%.

### Beispiel 3

Die Versuchsdurchführung erfolgt analog Beispiel 1. Es wird kein MAO im Reaktor vorgelegt. Die Katalysatorlösung wird durch Auflösen von 5 mg Bis(trimethylsilyl)silandiyl-diindenyl-zirkoniumdichlorid in 3,6 ml Toluol und Vermischen mit 9,2 g 30%igem MAO hergestellt.
Es wurden 45,7 g Polypropylen mit einer Molmasse M_{w} = 42 000 g/mol und einer Verteilungsbreite M_{w}/Mₙ = 2,0 erhalten.

### Beispiel 4

In einen 2 I-Rührreaktor wird nach der Inertisierung unter Stickstoff 1 dm³ gereinigtes n-Hexan dosiert. Nach Entgasung des Suspensionsmittels und Aufheizen des Reaktors auf die Reaktionstemperatur von 70 °C erfolgt der Polymerisationsstart durch Eindrücken der Katalysatorlösung mit Ethylen.
Die Katalysatorlösung wird durch Auflösen von 2 mg Bis(trimethylsilyl)silandiyldiindenylzirkoniumdichlorid in 1,7 ml Toluol und Vermischen mit 3,7 g 30%igem MAO hergestellt.
Der Druck im Reaktor wird während der gesamten Polymerisationszeit auf 2 bar durch Nachdosierung des Monomeren konstant gehalten. Die Rührerdrehzahl beträgt 700 Umdrehungen pro Minute, die Polymerisationszeit 1 Stunde.
Es wurden 25,4 g Polyethylen mit einer Molmasse M_{w} = 445 000 g/mol und eine Verteilungsbreite M_{w}/Mₙ = 5,8 erhalten.

### Beispiel 5

Die Versuchsdurchführung erfolgt analog Beispiel 1. Es wird kein MAO im Reaktor vorgelegt. Die Katalysatorlösung wird durch Auflösen von 6 mg Bis(trimethylsilyl)silandiyl-bis(2-methylindenyl)-zirkoniumdichlorid in 3,2 ml Toluol und Vermischen mit 10,5 g 30%igem MAO hergestellt. Die Reaktionszeit beträgt 2 Stunden.
Es wurden 48,3 g Polypropylen mit einer Molmasse M_{w} = 336 000 g/mol und einer Verteilungsbreite M_{w}/Mₙ = 2,2 erhalten.

### Beispiel 6

Die Versuchsdurchführung erfolgt analog Beispiel 1. Es wird kein MAO im Reaktor vorgelegt. Die Katalysatorlösung wird durch Auflösen von 5 mg Bis(trimethylsilyl)silandiyl-bis(2-methylindenyl)-zirkoniumdichlorid in 26,2 g 30 %igem MAO hergestellt. Die Reaktionszeit beträgt 2 Stunden.
Es wurden 92 g Polypropylen mit einer Molmasse M_{w} = 248 000 g/mol und einer Verteilungsbreite M_{w}/Mₙ = 2,0 erhalten.

### Beispiel 7

Ein 21 Rührreaktor wird nach dem Inertisieren bei Raumtemperatur mit 500 g flüssigem, gereinigtem Propylen gefüllt und anschließend auf 70°C aufgeheizt. 5 mg Bis(trimethylsilyl)silandiyl-bis(2-methylindenyl)zirkoniumdichlorid werden in 2,8 ml Toluol gelöst und mit 8,7 g 30%igem MAO gemischt. Die Katalysatorlösung wird mit Ethylen in den Reaktor gedrückt. Über die Reaktionszeit von 2 Stunden wird ein Ethylenpartialdruck von 1 bar aufrecht erhalten. Die Reaktion wird durch Flashen der Monomeren beendet.
Es wurden 174,4 g eines Ethylen/Propylen-Copolymeren mit einer Molmasse M_{w} = 101 000 g/mol und einer Verteilungsbreite M_{w}/Mₙ = 2,7 erhalten. Der Propylengehalt beträgt 16,6 Mol%.

### Beispiel 8

Die Versuchsdurchführung erfolgt analog Beispiel 1. Es werden 0,76 g 30%iges MAO im Reaktor vorgelegt. Die Katalysatorlösung wird durch Auflösen von 6,4 mg Methyl(trimethylsilyl)silandiyl-bis(2-methylindenyl)-zirkoniumdichlorid in 20 ml Toluol hergestellt. 0,6 ml werden mit 0,5 g 30%igem MAO vermischt und in den Reaktor dosiert. Die Reaktionszeit beträgt 2 Stunden.
Es wurden 62,9 g Polypropylen mit einer Molmasse M_{w} = 249 000 g/mol und einer Verteilungsbreite M_{w}/Mₙ = 2,6 erhalten.

## Patentansprüche

1. Metallocen der Formel I 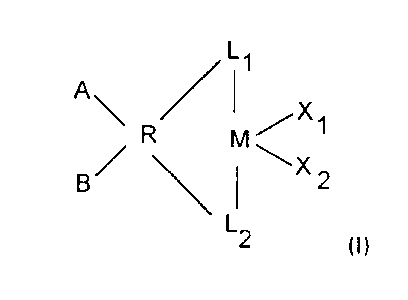 worin
M ein Metall aus der Gruppe Ti, Zr, Hf, V, Nb, Ta oder ein Element aus der Gruppe der Lanthaniden ist,
X₁ und X₂ gleich oder verschieden sind und eine C₁ - C₁₀-Alkylgruppe, eine C₁ - C₁₀- Alkoxygruppe, eine C₆ - C₁₀-Arylgruppe, eine C₆ - C₁₀- Aryloxygruppe, eine C₂ - C₁₀ -Alkenylgruppe, eine C₇- C₂₀- Arylalkylgruppe, eine C₇- C₂₀-Alkylarylgruppe, eine C₈ - C₂₀ - Arylalkenylgruppe, Wasserstoff oder ein Halogenatom bedeuten,
L₁ und L₂
a) gleich oder verschieden sind und einen gegebenenfalls ein- oder mehrfach substituierten ein- oder mehrkernigen Kohlenwasserstoffrest mit wenigstens einer Cyclopentadienyl- Einheit bedeuten, welcher mit M eine Sandwichstruktur bilden kann, oder
b) L₁ einen gegebenenfalls ein- oder mehrfach substituierten ein- oder mehrkernigen Kohlenwasserstoffrest mit wenigstens einer Cyclopentadienyl-Einheit bedeutet, welcher mit M eine Sandwichstruktur bilden kann und L₂ ein Amido-, Phosphido- oder Arsenidorest der Formel
E ― D〈
ist, in der D Stickstoff, Phosphor oder Arsen bedeuten und E die Bedeutung von X₁ und X₂ hat,
R Kohlenstoff, Silizium, Germanium oder Zinn ist,
A und B gleich oder verschieden sind und einen Trimethylsilylrest der Formel -Si(CH₃)₃ bedeuten, wobei B auch die Bedeutung eines C₁- bis C₁₀-Alkylrestes, bevorzugt eines C₁- bis C₄-Alkylrestes, oder eines C₆- bis C₁₀-Arylrestes haben kann.

2. Metallocene gemäß Anspruch 1, dadurch gekennzeichnet, daß die Liganden L₁ und/oder L₂ substituierte oder unsubstituierte Cyclopentadienyl-, Indenyl- oder Fluorenylreste sind.

3. Verfahren zur Herstellung von Metallocenen der Formel I gemäß einem der Ansprüche 1 oder 2, dadurch gekennzeichnet, daß man eine Verbindung der Formel II 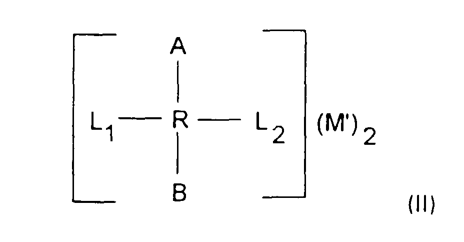 mit einer Verbindung der Formel III
M (X')₂ X₁ X₂ (III)
umsetzt, wobei L₁, L₂, A, B, R, M, X₁, X₂ die in Anspruch 1 angeführte Bedeutung haben, M' ein Alkalimetall und X' ein Halogenatom bedeuten.

4. Verfahren zur Herstellung von Metallocenen der Formel I gemäß Anspruch 3, dadurch gekennzeichnet, daß die Umsetzung der Verbindung II mit der Verbindung III in Suspension in Lösungsmittelgemischen aus aromatischen und /oder aliphatischen Kohlenwasserstoffen, die auch halogeniert sein können, mit Dialkylethern durchgeführt wird.

5. Verfahren gemäß Anspruch 4 dadurch gekennzeichnet, daß die Lösungsmittelgemische Übergangsenergien E_{T}(30) in einem Bereich von 35,5 bis 31,5 kcal/mol, vorzugsweise in einem Bereich von 34,5 bis 32,5 kcal/mol besitzen.

6. Verfahren gemäß Anspruch 4 oder 5, dadurch gekennzeichnet, daß man eine Verbindung der Formel II als Lösung in Dialkylethern mit einer Verbindung der Formel III als Suspension in aromatischen und/oder aliphatischen Kohlenwasserstoffen, die auch halogeniert sein können, umsetzt, wobei das Lösungsmittelgemisch eine Übergangsenergie ET(30) von 35,5 bis 31,5 kcal/mol besitzt.

7. Verwendung von Metallocenen gemäß einem der Ansprüche 1 bis 6 als Polymerisationskatalysatoren bei der Polymerisation von Olefinen.

8. Verfahren zur Herstellung von Polyolefinen durch Polymerisation von Olefinen, dadurch gekennzeichnet, daß als Katalysatoren Metallocene gemäß einem der Ansprüche 1 bis 7 eingesetzt werden.

9. Verfahren zur Herstellung von Polyolefinen gemäß Anspruch 8, dadurch gekennzeichnet, daß zusätzlich zu den Metallocenen Aluminoxane als Cokatalysatoren eingesetzt werden.

## Claims

1. Metallocene of the formula I 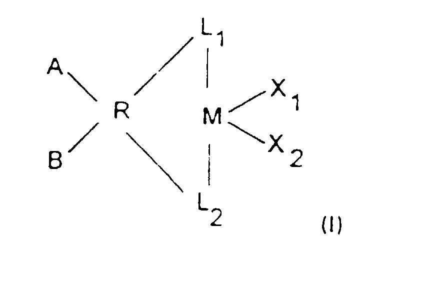 where
M is a metal selected from the group consisting of Ti, Zr, Hf, V, Nb and Ta or an element selected from the group consisting of the lanthanides,
X₁ and X₂ are identical or different and are each a C₁-C₁₀- alkyl group, a C₁-C₁₀-alkoxy group, a C₆-C₁₀-aryl group, a C₆-C₁₀-aryloxy group, a C₂-C₁₀-alkenyl group, a C₇-C₂₀-arylalkyl group, a C₇-C₂₀-alkylaryl group, a C₈-C₂₀-arylalkenyl group, hydrogen or a halogen atom,
L₁ and L₂
a) are identical or different and are each an unsubstituted, monosubstituted or polysubstituted monocyclic or polycyclic hydrocarbon radical containing at least one cyclopentadienyl unit which can form a sandwich structure with M, or
b) L₁ is an unsubstituted, monosubstituted or polysubstituted monocyclic or polycyclic hydrocarbon radical containing at least one cyclopentadienyl unit which can form a sandwich structure with M, and L₂ is an amido, phosphido or arsenido radical of the formula
E-D〈
where D is nitrogen, phosphorus or arsenic and E is as defined for X₁ and X₂,
R is carbon, silicon, germanium or tin,
A and B are identical or different and are each a trimethylsilyl radical of the formula -Si(CH₃)₃, where B may also be a C₁-C₁₀-alkyl radical, preferably a C₁-C₄-alkyl radical, or a C₆-C₁₀-aryl radical.

2. Metallocenes according to Claim 1, characterized in that the ligands L₁ and/or L₂ are substituted or unsubstituted cyclopentadienyl, indenyl or fluorenyl radicals.

3. Process for preparing metallocenes of the formula I according to Claim 1 or 2, characterized in that a compound of the formula II 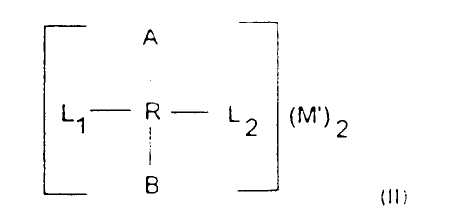 is reacted with a compound of the formula III
M(X')₂X₁X₂ (III)
where L₁, L₂, A, B, R, M, X₁, X₂ are as defined in Claim 1, M' is an alkali metal and X' is a halogen atom.

4. Process for preparing metallocenes of the formula I according to Claim 3, characterized in that the reaction of the compound II with the compound III is carried out in solvent mixtures of aromatic and/or aliphatic hydrocarbons, which may also be halogenated, with dialkyl ethers.

5. Process according to Claim 4, characterized in that the solvent mixtures have transition energies E_{T}(30) in a range from 35.5 to 31.5 kcal/mol, preferably in a range from 34.5 to 32.5 kcal/mol.

6. Process according to Claim 4 or 5, characterized in that a compound of the formula II as a solution in dialkyl ethers is reacted with a compound of the formula III as a suspension in aromatic and/or aliphatic hydrocarbons which may also be halogenated, where the solvent mixture has a transition energy E_{T}(30) of from 35.5 to 31.5 kcal/mol.

7. Use of metallocenes according to any of Claims 1 to 6 as polymerization catalysts in the polymerization of olefins.

8. Process for preparing polyolefins by polymerization of olefins, characterized in that metallocenes according to any of Claims 1 to 7 are used as catalyst.

9. Process for preparing polyolefins according to Claim 8, characterized in that aluminoxanes are used as cocatalyst in addition to the metallocenes.

## Revendications

1. Métallocène de formule I 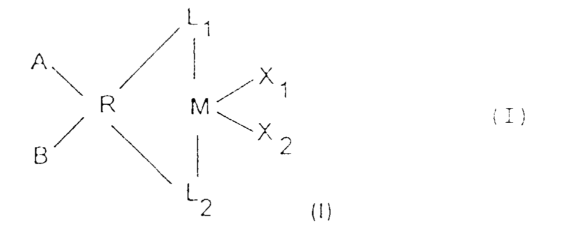 dans laquelle
M est un métal choisi dans l'ensemble constitué par Ti, Zr, Hf, V, Nb, Ta ou un élément choisi dans l'ensemble constitué par les lanthanides,
X₁ et X₂ sont identiques ou différents et signifient un groupe alkyle en C₁ - C₁₀, un groupe alcoxy en C₁ - C₁₀, un groupe aryle en C₆ - C₁₀, un groupe aryloxy en C₆ - C₁₀, un groupe alcényle en C₂ - C₁₀, un groupe aryalkyle en C₇ - C₂₀, un groupe alkylaryle en C₁ - C₂₀, un groupe arylalcényle en C₈ - C₂₀, l'hydrogène ou un atome d'halogène,
L₁ et L₂
a) sont identiques ou différents et signifient un reste hydrocarbure mono- ou polynucléaire, éventuellement mono- ou polysubstitué, ayant au moins une unité cyclopentadiényle, qui peut former une structure en sandwich avec M,
b) L₁ signifie un reste hydrocarbure mono- ou polynucléaire, éventuellement mono- ou polysubstitué, ayant au moins une unité cyclopentadiényle, qui peut former une structure en sandwich avec M, et L₂ est un reste amido, phosphido ou arsénido de formule
E ― 〈
dans laquelle D signifie l'azote, le phosphore ou l'arsenic, et E a la signification de X₁ et de X₂,
R est le carbone, le silicium, le germanium ou l'étain,
A et B sont identiques ou différents et signifient un reste triméthylsilyle de formule -Si(CH₃)₃, B pouvant aussi avoir la signification d'un reste alkyle en C₁ - C₁₀, de préférence d'un reste alkyle en C₁ - C₄, ou d'un reste aryle en C₁ - C₁₀.

2. Métallocènes selon la revendication 1, caractérisés en ce que les ligands L₁ et/ou L₂ sont des restes cyclopentadiényle, indényle ou fluorényle substitués ou non substitués.

3. Procédé de préparation de métallocènes de formule I selon l'une des revendications 1 et 2, caractérisé en ce qu'on fait réagir un composé de formule II 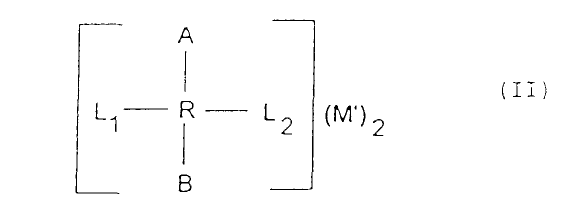 avec un composé de formule III
M(X')₂X₁X₂ (III)
dans lesquelles L₁, L₂, A, B, R, M, X₁ et X₂ ont les significations indiquées dans la revendication 1, M' signifie un métal alcalin et X' signifie un atome d'halogène.

4. Procédé de préparation de métallocènes de formule I selon la revendication 3, caractérisé en ce qu'on effectue la réaction du composé Il avec le composé III en suspension dans des mélanges de solvants formés d'hydrocarbures aromatiques et/ou aliphatiques, qui peuvent aussi être halogénés, avec des éthers de dialkyle.

5. Procédé selon la revendication 4, caractérisé en ce que les mélanges de solvants possèdent des énergies de transition E_{T}(30) comprises entre 35,5 Et 31,5 kcal/mole, de préférence entre 34,5 et 32,5 kcal/mole.

6. Procédé selon la revendication 4 ou 5, caractérisé en ce qu'on fait réagir un composé de formule II en solution dans des éthers de dialkyle avec un composé de formule III en suspension dans des hydrocarbures aromatiques et/ou aliphatiques qui peuvent aussi être halogénés, le mélange de solvants possédant une énergie de transition E_{T}(30) de 35,5 à 31,5 kcal/mole.

7. Utilisation de métallogènes selon l'une des revendications 1 à 6 en tant que catalyseurs de polymérisation pour la polymérisation d'oléfines.

8. Procédé de préparation de polyoléfines par polymérisation d'oléfines, caractérisé en ce qu'on utilise des métallocènes selon l'une des revendications 1 à 7 en tant que catalyseurs.

9. Procédé de préparation de polyoléfines selon la revendication 8, caractérisé en ce qu'on utilise des aluminoxanes en tant que co-catalyseurs en plus des métallocènes.
